# EUROPÄISCHE PATENTSCHRIFT

(11) **EP 1 525 772 B1**
(45) Veröffentlichungstag und Bekanntmachung des Hinweises auf die Patenterteilung: **21.02.2007**
(21) Anmeldenummer: 03787592.9
(22) Anmeldetag: 11.06.2003
(51) Int. Cl.: H04Q 11/04

(54) **EFFIZIENTER ANSCHLUSS VON ISDN-NEBENSTELLENANLAGEN AN EIN PAKETNETZ**
EFFICIENT CONNECTION OF ISDN PRIVATE BRANCH EXCHANGES TO A PACKET-SWITCHED NETWORK
CONNEXION EFFICACE D'UN AUTOCOMMUTATEUR PRIVE DANS UN RESEAU A COMMUTATION PAR PAQUETS

(30) Priorität: 31.07.2002 DE 10234936
(43) Veröffentlichungstag der Anmeldung: 27.04.2005
(73) Patentinhaber: SIEMENS AKTIENGESELLSCHAFT, 80333 München (DE)
(72) Erfinder: LÖBIG, Norbert, 64291 Darmstadt (DE)
(86) Internationale Anmeldenummer: PCT/DE2003/001947
(87) Internationale Veröffentlichungsnummer: WO 2004/017667

(56) Entgegenhaltungen:
- EP-A- 0 948 236
- EP-A- 1 170 963

## Beschreibung

Die Erfindung betrifft ein Verfahren und einen peripheren Adapter zum Austausch von Signalisierungsinformationen zwischen einem ISDN-Anschluss und einer paketorientierten Vermittlungsstelle.

Die Konvergenz bzw. der Zusammenschluss von zeitmultiplexbasierten Netzen - auch TDM (time devision multiplexing) Netze genannt - und paketbasierten Netzen führt zu neuen vermittlungstechnischen Anforderungen hinsichtlich der Umsetzung von Signalisierungs- und Nutzdaten.

Im Zuge der Abstimmung von zeitmultiplexbasierten und paketbasierten Netzen aufeinander - hier wird häufig auch der aus dem Englischen übernommene Ausdruck Interworking benutzt - sind sowohl teilnehmernahe als auch vermittlungsknotenseitige Anpassungen erforderlich.

Eine TDM-basierte Vermittlungsstelle bzw. ein TDM-basierter Vermittlungsknoten veranlasst die Verbindungssteuerung und die Terminierung bzw. Durchschaltung der Nutzkanäle. Das Aufgabenspektrum einer Vermittlungsstelle für Datenübertragung im Paketnetz - im folgenden paketbezogene Vermittlungsstelle genannt - beinhaltet dagegen zuzüglich zu der herkömmlich Verbindungssteuerung die Steuerung der zugehörigen, außerhalb der paketbasierten Vermittlungsstelle geführten Nutzkanäle über externe Einrichtungen (z.B. Gateways, Ressourcen-Server,...), welche geeignete Schnittstellen für Nutzdatenströme (z.B. mit Hilfe des RTP (Real Time Protocols)) und Steuerung (z.B. mit Hilfe eines der folgenden Protokolle: MGCP (Media Gateway Control Protocol), H.248, H.323) bereitstellen.

Für die Endgeräteseite gibt es neben den klassischen analogen und ISDN-Endgeräten und Nebenstellen auch für das Paketnetz geeignete Terminals, die breitbandigen Datenzugriff erlauben, zusätzlich aber zur Unterstützung der von öffentlichen Fernsprechnetzen bekannten Basisleistungsmerkmale in der Lage sind (z.B. mit Hilfe des H.323 Protokolls oder des SIP (Session Initiation Protocol) Protokolls). Als breitbandiges Zugangsmedium bzw. Zugangsnetz zum Teilnehmer findet man häufig entweder mit geeigneten xDSL-Techniken (DSL: Digital Subscriber Line) betriebene Teilnehmeranschlussleitungen oder Kabelnetze.

Die Schnittstelle zwischen Zugangsnetz und Übertragungsnetz, z.B. paketbasiertes IP (Internet Protocol) Netz, wird in der Regel durch teilnehmernahe Adaptionseinrichtungen gebildet. Für teilnehmernahe Adaptionseinrichtungen wird häufig auch der Ausdruck "peripherer Adapter" gebraucht. Beispiele für teilnehmernahe Adaptionseinrichtungen sind IAD (Integrated Access Device) zur Terminierung einer xDSL-Strecke und MTA (Multimedia Terminal Adapter) am oder im Cable Modem, die übertragungsnetzseitig das Zugangsnetz abschließen. Über teilnehmernahe Adaptionseinrichtungen und Zugangsnetze ist dann der Anschluss breitbandiger Endeinrichtungen (z.B. PC mit Internetzugriff, Fernsehgerät, Videotelephon) wie auch klassischer Teilnehmerendgeräte, z.B. analoges Telephon, ISDN-Telephon, sowie analoger und ISDN-Nebenstelle möglich.

Paketorientierte Vermittlungsstellen sollten für klassische Endgeräte, d.h. Telefone und Nebenstellenanlagen, nach Möglichkeit alle von der leitungsgebundenen Anschlusstechnik bekannten Leistungsmerkmale zur Verfügung stellen, damit die Einbindung paketorientierter Netze nicht zur Einschränkung des Merkmalspektrums von Diensten führt. Daneben muss die Nichtverfügbarkeit von Hardware- und Software-Ressourcen sowie die Nichterreichbarkeit von Endgeräten detektiert und gegebenenfalls eine Alarmierung des Bedieners vorgenommen werden. Strukturen der zwischengelagerten Zugangsnetze sind dem paketorientierten Vermittlungsknoten jedoch in der Regel unbekannt. Z.B. werden Ausfallsituationen von Komponenten und Netzanteilen, die den Signalisierungsweg zwischen paketorientiertem Vermittlungsknoten und Teilnehmerendeinrichtung betreffen, dem Vermittlungsknoten nur indirekt, d.h. über Erkennung der Nichterreichbarkeit von Teilnehmern und Nebenstellen offenbar.

Über ein Paketnetz erreichbare klassische analoge und ISDN-Teilnehmer sind zur Unterscheidung von rein paketbasierten Teilnehmern (SIP, H.323) und klassischen, leitungsgebunden angeschlossenen analogen und ISDN-Teilnehmern (z.B. Anschlüsse über die Schnittstellen V5.1 und V5.2) im paketbasierten Vermittlungsknoten administrativ in besonderer Weise gekennzeichnet. Die peripheren, teilnehmernahen Adaptionseinrichtungen besitzen spezielle Funktionen (z.B. Telephonie Client in IADs und MTAs), die die Übertragung der Signalisierung zwischen Endgerät und paketbasierter Vermittlungsstelle über zwischengelagerte Zugangsnetze und paketbasierte Übertragungsnetze bzw. Weitverkehrsnetze ermöglichen. Die paketbasierten Vermittlungssysteme und Clients in den peripheren Adaptionseinrichtungen (IAD, MTA) können dazu durch die Netzwerkverwaltung entsprechend konfiguriert werden. Bei der Bereitstellung von Funktionen in den teilnehmernahen Adaptionseinrichtungen für die Übertragung der Signalisierung werden aus Sicht des Vermittlungssystems analoge und ISDN Schnittstellen unterschieden. Weiteres Unterscheidungsmerkmal aus Sicht des paketbasierten Vermittlungssystems ist die Zuordnung von Leistungsmerkmalen eines Hauptanschlusses oder eines Nebenstellenanschlusses. Aus Sicht des Teilnehmers wird dann entweder ein als Hauptanschluss betriebenes analoges oder ISDN-Endgerät an den peripheren Adapter (IAD, MTA) angeschlossen, oder es wird eine analoge oder ISDN-Nebenstellenanlage (auch PBX oder Private Branch Exchange genannt) in gleicher Weise angeschlossen.

Hinsichtlich ISDN-Schnittstellen, z.B. an der peripheren Adaptionseinrichtung, unterscheidet man zwei verschiedene Anschlüsse bzw. Schnittstellen:
- Bei dem Basisanschluss, auch mit BRA (Basic Rate Access) bezeichnet, sind ein oder zwei Nutzkanäle vorhanden. Häufig hat man zwei Nutzkanäle (B-Kanal) zu je 64 kbit/s (56 kbit/s in den USA) und einen Signalisierungskanal (D-Kanal) zu 16 kbit/s.
- Die zweite Anschlussart, auch mit PRA (Primary Rate Access) bezeichnet, ist der Primärmultiplexanschluss, in der Regel bestehend aus 30 B-Kanälen (wegen des PCM30-Systems), einem Synchronisationskanal und einem Signalisierungskanal (D-Kanal).Gemäß Standardisierung sind ebenfalls bis zu 4 PCM30-Systeme mit einem einzigen D-Kanal zu einem PRA zusammenfassbar.

Der Zustand (Layer 1, Layer 2, Blockierungszustand) des ISDN-Anschlusses (BRA, PRA) ist einer klassischen Ortsvermittlungsstelle eines TDM Netzes im Gegensatz zum Falle einer paketbasierten Vermittlungsstelle auf Grund physikalischer Leitungsterminierung oder der Schnittstellenprotokolle zu Teilnehmerkonzentratoren und Access Networks bekannt.

Auch für Paketnetze müssen über periphere Adapter kleine ISDN-Nebenstellen über einen BRA oder eine Mehrzahl von BRAs anschließbar sein; große ISDN-Nebenstellen müssen über einen oder eine Mehrzahl von PRAs anbindbar sein, wobei auch Mischungen von BRAs und PRAs im Hinblick auf eine gegebene ISDN-Nebenstelle unterstützbar sein müssen. Hierbei werden BRA und PRA eventuell über einen einheitlichen oder über spezifische periphere Adapter angeschlossen und physikalisch terminiert. Die ISDN-Signalisierung kann dann paketbasiert zwischen peripherem Adapter und paketorientierter Vermittlungsstelle (z. B. mittels ISDN User Adaptation IUA und SCTP) ausgetauscht werden. Dieses geschieht üblicherweise mittels des DSS1 (Digital Signalling System No.1) Protokolls, zu dem Details in dem Standard ITU-T Q.931 (ISDN user-network interface layer 3 specification for basic call control) dargelegt sind.

Aus der EP-A-0948236 ist ein Verfahren zur Mehrfachausnutzung eines Telekommunikationskanals bekannt, bei dem Basisanschlüsse von Endgeräten mit Nutzkanälen und jeweils einem zugehörigen Signalisierungskanal mittels einer multiplexenden Zusatzeinrichtung zusammengefasst und auf einen einzigen Primärmultiplexeranschluss abgebildet werden. Dabei wird der mehrfach genutzte Primärmultiplexeranschluss direkt einer Vermittlungseinrichtung zugeführt. Durch entsprechende Konfigurierung in dieser Vermittlungseinrichtung wird einem D16-Subkanal eine Teilnehmersignalisierung zugeordnet, so dass die Signalisierungskanäle und die zugehörigen Nutzkanäle für jeden logisch getrennten Anschluss auf einem gemeinsamen physikalischen Anschluss in der Vermittlungseinrichtung separat behandelt werden können.

Die Erfindung hat zur Aufgabe, eine flexible und effiziente Realisierung für den Anschluss von ISDN-Nebenstellenanlagen mit peripheren Adaptern an ein Paketnetz anzugeben.

Bei der Erfindung werden zwischen einem ISDN-Anschluss, beispielsweise ein ISDN-BRA oder ISDN-PRA Anschluss, und einer paketorientierten Vermittlungsstelle Signalisierungsinformationen über einen peripheren Adapter ausgetauscht. An dem ISDN-Anschluss kann z.B. ein ISDN-Endgerät oder eine ISDN-Nebenstellenanlage angeschlossen sein. Die Behandlung bzw. Bearbeitung der von dem ISDN-Anschluss übertragenen Signalisierungsinformationen in der paketbasierten Vermittlungsstelle erfolgt unabhängig vom Typ des ISDN-Anschlusses. Z.B. wird in der paketbasierten Vermittlungsstelle nicht zwischen ISDN-BRA und ISDN-PRA Anschlüssen unterschieden. Bei dem peripheren Adapter handelt es sich beispielsweise um ein IAD oder ein MTA. Zum Zwecke der vom ISDN-Anschlusstyp unabhängigen Behandlung von Signalisierungsinformationen durch die paketorientierte Vermittlungsstelle werden von den ISDN-Anschluss zu dem peripheren Adapter übertragene Signalisierungsinformationen angepasst. Entsprechend werden von der paketorientierten Vermittlungsstelle zu dem peripheren Adapter übertragene Signalisierungsinformationen zur Weiterübermittlung an den ISDN-Anschluss nach Maßgabe des ISDN-Anschlusstyps angepasst. Auf diese Weise können in der paketorientierten Vermittlungsstelle verschiedene ISDN-Anschlüsse durch einen einzigen Anschlusstyp repräsentiert werden. Im allgemeinen umfassen verschiedene ISDN-Anschlusstypen eine unterschiedliche Anzahl von Nutzdatenkanälen. So hat der PRA-Anschluss i. a. 30 Nutzdatenkanäle und einen Signalisierungskanal. Der BRA-Anschluss oder Basisanschluss umfasst dagegen üblicherweise ein oder zwei Nutzdatenkanäle und einen Signalisierungskanal. Bei der erfindungsgemäßen Anpassung von Signalisierungsinformationen in dem peripheren Adapter kann für unterschiedliche Anschlusstypen auf der Seite des paketorientierten Vermittlungssystems und der des ISDN-Anschlusses eine Abbildung der unterschiedlichen Nutzdatenkanäle aufeinander vorgenommen werden. Dabei können Nutzdatenkanäle bzw. logische Ports im Paketnetz durch die Adressierung der Pakete bzw. die Adressen der Pakete unterschieden werden. Bei Nutzdatenübertragung im TDM- und im Paketnetz wird auch häufig statt des Begriffs Nutzdatenkanal der aus dem Englischen entlehnte Begriff Bearer verwendet. Erfindungsgemäß besteht dann eine Zuordnung zwischen logischem Port bzw. Nutzdatenkanal (Bearer) und der Bereitstellung von Ressourcen in paketorientierten Vermittlungssystemen. Zum Beispiel kann die Abarbeitung eines vermittlungstechnischen Programms in dem paketorientierten Vermittlungssystem nach Maßgabe des logischen Ports bzw. des Nutzdatenkanals vorgenommen werden. Auf der Seite des ISDN-Anschlusses sind physikalische Ports gegeben sowie Nutzdatenkanäle, die bei der Übertragung über ein TDM-Netz festen Zeitschlitzen zugeordnet sind. Eine erfindungsgemäße Umsetzung der Nutzdatenkanäle des PRA auf Nutzkanäle von logischen Ports sowie eine entsprechende Anpassung der Signalisierungsinformationen in peripheren Adaptern kann mit Hilfe einer Tabelle in den peripheren Adaptern vorgenommen werden. Eine solche Tabelle wird beispielsweise durch die Netzwerkverwaltung in dem peripheren Adapter eingerichtet. Dies bedingt, dass die Netzwerkverwaltung die Hardwareschnittstellen bzw. die physikalischen Ports des ISDN-Anschlusses kennt, um die Tabelle einrichten zu können. Üblicherweise verfügt die Netzwerkverwaltung über diese Information schon aus dem Grund, dass von ihr der periphere Adapter geeignet konfiguriert werden muss. Im Gegensatz zur Netzwerkverwaltung sind die Details bezüglich des ISDN-Anschlusses für die paketorientierte Vermittlungsstelle transparent. Die von der Netzwerkverwaltung vorgehaltenen Informationen über Hardwaredetails des ISDN-Anschlusses brauchen der paketorientierten Vermittlungsstelle nicht zur Verfügung zu stehen. Alle physikalischen ISDN-anschlusseigenen Funktionen können in dem peripheren Adapter behandelt werden, wobei die Administration der paketbasierten Vermittlungsstelle sich auf einen einheitlichen logischen ISDN-Porttyp bzw. ISDN-Anschlusstyp mit einer festen Anzahl von Nutzkanälen reduzieren lässt.

Durch die Erfindung lässt sich der Implementierungsaufwand in der paketorientierten Vermittlungsstelle reduzieren, denn es muss nur ein einziger ISDN-Anschlusstyp behandelt werden. Die Administration von Hardwaredaten in der paketorientierten Vermittlungsstelle, die bereits für den peripheren Adapter verwaltet werden müssen, wird vermieden, woraus eine Reduktion des Bedienaufwands für das Netz und der Ausschluss von Dateninkonsistenzen zwischen peripheren Adapter und paketbasierter Vermittlungsstelle resultiert. Mit der Reduktion des Administrationsaufwandes geht ein geringerer Ressourcenverbrauch in der paketbasierten Vermittlungsstelle einher, der sich beispielsweise bei der Speicherbelegung manifestiert und sich daraus ergibt, dass auf ISDN-Anschluss bezogene Informationen in der paketbasierten Vermittlungsstelle nicht abgespeichert zu werden brauchen. Man hat durch die Anpassungsfunktion des peripheren Adapters eine flexible Zuordnung der logischen Ressourcen der paketbasierten Vermittlungsstelle zu den physikalisch vorhandenen Ressourcen des peripheren Adapters geschaffen, die durch die Netzwerkverwaltung anpassbar ist. Die erfindungsgemäße Anpassung im peripheren Adapter erlaubt zudem eine Konzentration von Nutzdatenkanälen. Z.B. können die 30 Nutzdatenkanäle einer Nebenstellenanlage mit PRA-Anschluss auf weniger als 15 BRA-Anschlüsse in der paketorientierten Vermittlungsstelle abgebildet werden. Hierbei wird davon ausgegangen, dass der voranstehend genannte logische Porttyp der paketbasierten Vermittlungsstelle zusammenfällt mit dem ISDN BRA mit bis zu 2 Bearer Channels. Dies ist eine ökonomische Lösung bei schwacher Auslastung der Nutzdatenkanäle des ISDN-Anschlusses. Durch Konfiguration des peripheren Adapters kann bei Bedarf die Konzentration der Nutzdatenkanäle an eine geänderte Auslastung der Nutzdatenkanäle des ISDN-Anschlusses flexibel angepasst werden. Die Berücksichtigung von PRA mit mehr als 30 Nutzkanälen ist hierbei ebenfalls möglich.

Bei Unterschieden zwischen den logischen ISDN-Anschlüssen in der paketorientierten Vermittlungsstelle und den teilnehmerseitigen physikalischen ISDN-Anschlüssen muss häufig neben einer Abbildung der Nutzdatenkanalbezüge, z.B. Kanalnummern, in den peripheren Adapter auch eine Anpassung der Rufkennung vorgenommen werden. Dabei ist mit Rufkennung die in der ITU-T Q.931, ISDN user-network interface layer 3 specification for basic call control, als Call Reference bezeichneten Identifizierungsinformation gemeint. Diese Rufkennung unterscheidet Rufe bzw. Calls. Im Gegensatz zur Rufnummer eines Teilnehmers kann für eine Verbindung die Rufkennung auf disjunkten Teilstrecken unterschiedliche Werte annehmen. Rufkennungen werden Verbindungen zugeordnet. Nach Ende einer Verbindung ist die zugehörige Rufkennung wieder frei und kann neu vergeben werden. Schließlich ist eine Rufkennung nur innerhalb eines Signalisierungskanals eindeutig. Letztere Eigenschaft bedingt, dass in vielen Fällen eine Umsetzung der Rufkennung im peripheren Adapter vorgenommen werden muss. Beispielsweise wird vermittlungsstellenseitig mit logischen BRA-ISDN-Anschlüssen gearbeitet, die jeweils zwei Basiskanäle und einen Signalisierungskanal umfassen. Mehrere von diesen logischen BRA-ISDN-Anschlüssen werden dann auf einen PRA-ISDN-Anschluss mit dreißig Nutzdatenkanälen und einen Signalisierungskanal abgebildet. Mithin erfolgt die Abbildung von mehreren Signalisierungskanälen auf einen Signalisierungskanal, dass heißt ohne eine Anpassung der Rufkennungen wäre die Eindeutigkeit der Rufkennungen in Frage gestellt.

Bei der Signalisierung zwischen ISDN-Anschluss und peripheren Adapter kommt z.B. das D-Kanal-Protokoll DSS1 (Digital Subscriber Signaling System no. 1) zur Anwendung. Bei diesem Protokoll können entsprechend dem OSI (Open Systems Interconnection) Modell Bitübertragungsschicht (Schicht 1), Sicherungsschicht (Schicht 2) und Vermittlungsschicht (Schicht 3) unterschieden werden. Die Sicherungsschicht ist in den Standards ITU-T Q.920 (ISDN user-network interface data link layer - General aspects) und ITU-T Q.921 (SDN user-network interface - Data link layer specification) beschrieben. Als von ISDN-Nebenstellen bekannte Optimierung wird in Analogie vorgeschlagen, zwischen ISDN-Anschluss und peripherem Adapter nicht für jeden Call einen neuen Verbindungsaufbau auf der Sicherungsschicht (data Link connection in Q.920) durchzuführen, sondern permanent oder über einen längeren Zeitraum den Transport von Signalisierungsnachrichten auf der Vermittlungsschicht durch die Sicherungsschicht ohne neue Anpassungen auf der Sicherungsschicht zu gewährleisten. Signalisierungsnachrichten der Schicht 3, die in den Standards ITU-T Q.930 (ISDN user-network interface layer 3 - General aspects) und ITU-T Q.931 (SDN user-network interface layer 3 specification for basic call control) beschrieben sind, werden dann nach eventueller Anpassung im peripheren Adapter paketnetzseitig mit Hilfe des SCTP (stream control transmission protocol) Protokolls und geeigneter DSS1-Anpassungen (IUA)weiterübertragen.

Im folgenden wird die Erfindung im Rahmen eines Ausführungsbeispieles anhand von Figuren näher erläutert. Es zeigen:
- Fig. 1:: eine Anordnung von Netzwerkelementen mit erfindungsgemäßer Behandlung von ISDN-Anschlüssen in einer paketbasierten Vermittlungsstelle,
- Fig. 2:: erfindungsgemäße Umordnung der Nutzkanäle im Zuge einer ISDN-Anschluss unabhängigen Repräsentation in der paketorientierten Vermittlungsstelle,
- Fig. 3:: eine der Figur 2 entsprechende Umordnung der Nutzkanalsteuerung,
- Fig. 4:: erfindungsgemäße Anpassung der Rufkennungen.

In den Figuren bezeichnen gleiche Bezugszeichen gleiche Elemente.

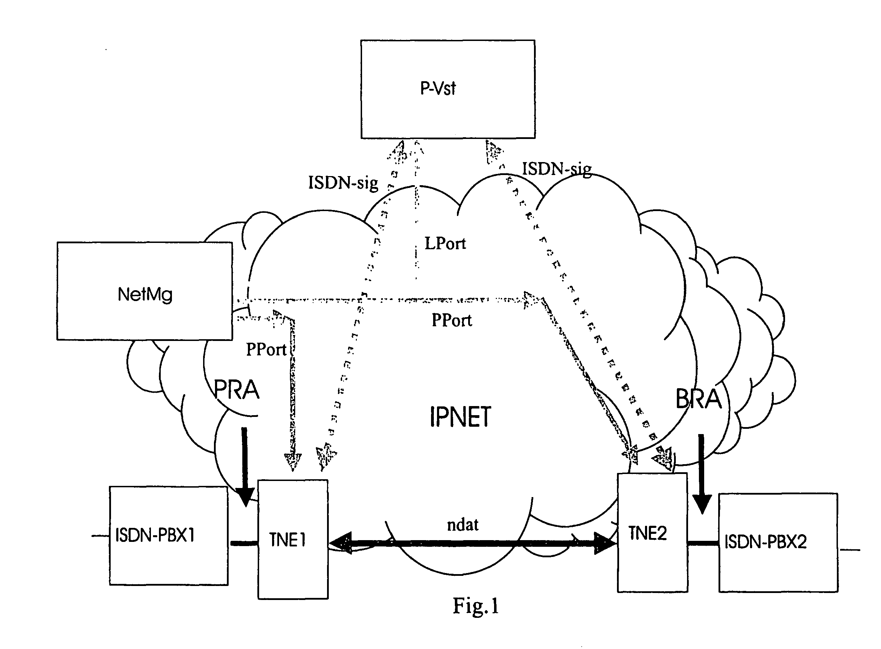

In Figur 1 sind zwei ISDN-Nebenstellen ISDN-PBX1 und ISDN-PBX2 über zwei periphere Adapter bzw. teilnehmernahe Einrichtungen TNE1 und TNE2 an ein Paketnetz IPNET angeschlossen. Bei den peripheren Adapter TNE1 und TNE2 handelt es sich beispielsweise um IADs oder MTAs. Zwischen den beiden peripheren Adaptern TNE1 und TNE2 können Nutzdaten ndat, beispielsweise im Zuge eines über das paketbasierte Netz IPNET geleiteten Telefonats, ausgetauscht werden. Auf diese Weise können zwei Teilnehmer, die an die Nebenstellen ISDN-PBX1 bzw. ISDN-PBX2 angeschlossen sind, miteinander kommunizieren. Die Nebenstelle ISDN-PBX1 ist mit einem PRA-Anschluss mit dreißig Nutzdatenkanälen und einem Signalisierungskanal an den peripheren Adapter TNE1 angeschlossen. Die zweite Nebenstelle ISDN-PBX2 ist dagegen mit einem BRA-Anschluss mit zwei Nutzdatenkanälen und einem Signalisierungskanal an den peripheren Adapter TNE2 angeschlossen. Beide unterschiedlichen Anschlüsse werden in der paketorientierten Vermittlungsstelle P-Vst auf dieselbe einheitliche Weise repräsentiert, nämlich als BRA-Anschlüsse. Zum Behuf der Nutzdatenübertragungssteuerung tauscht die paketorientierte Vermittlungsstelle P-Vst mit den peripheren Adaptern TNE1 und TNE2 Signalisierungsinformationen ISDN-sig aus. Die Steuerung der Nutzdatenübertragung erfolgt beispielsweise mit Hilfe des MGCP (Media Gateway **Control** Protocol)-Protokolls oder des H.248-Protokolls. Im Gegensatz zur paketorientierten Vermittlungsstelle P-Vst unterscheidet das Netzwerkmanagement NetMg verschiedene ISDN-Anschlusstypen. Das Netzwerkmanagement NetMg administriert bzw. konfiguriert die bei den peripheren Adaptern TNE1 und TNE2 vorgehaltenen Informationen über die physikalischen Anschlüsse bzw. Ports der Nebenstellen ISDN-PBX1 und ISDN-PBX2. Zudem wird durch das Netzwerkmanagement NetMg die logische Repräsentation der ISDN-Nutzdatenkanäle bzw. die logischen Ports der ISDN-Nutzdatenkanäle in der paketorientierten Vermittlungsstelle P-Vst eingerichtet bzw. verwaltet. Der Transport von ISDN-Signalisierungsnachrichten zwischen den peripheren Adaptern TNE1 bzw.TNE2 und der paketorientierten Vermittlungsstelle P-Vst kann mit Hilfe des SCTP (Stream Control Transmission Protocol)-Protokolls und ISDN-spezifischer Adaptionsschicht (z. B. IUA) vorgenommen werden. Mit Hilfe des SCTP-Protokolls können in IP (Internet Protocol)-Netzen SS7 Signalisierungsnachrichten effizient übertragen werden. Für die Signalisierung zwischen den ISDN-Nebenstellen ISDN-PBX1 und ISDN-PBX2 und dem jeweils zugehörigen peripheren Adapter TNE1 bzw. TNE2 wird beispielsweise das DSS1 (Digital Signaling System No. 1)-Protokoll verwendet. Für die Repräsentation des PRA-Anschlusses in Figur 1 durch BRA-Anschlüsse in der paketbasierten Vermittlungsstelle P-Vst werden erfindungsgemäß in dem peripheren Adapter TNE1 Anpassungen vorgenommen.

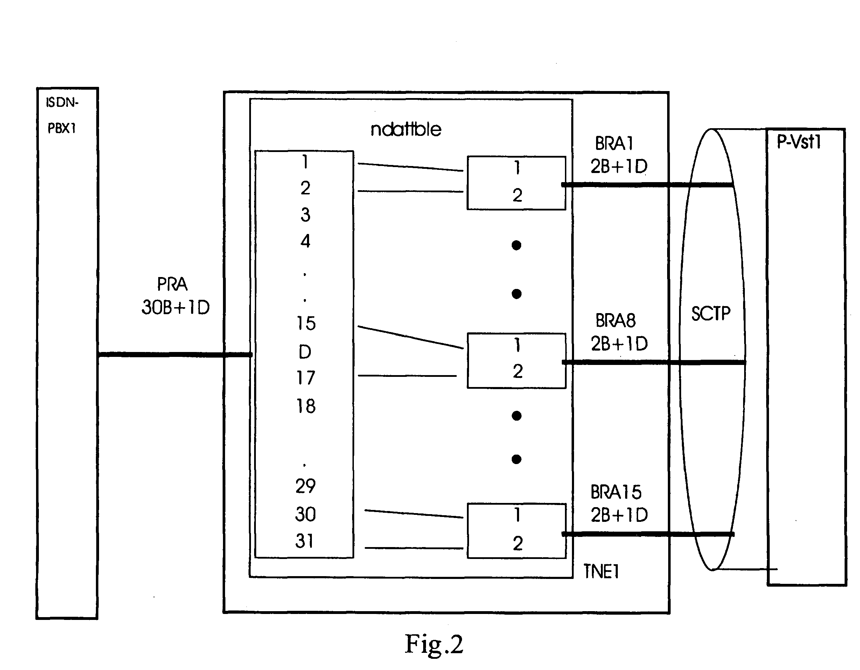

In Figur 2 ist gezeigt, wie eine Anpassung der Nutzdatenbezüge zum Zwecke der Repräsentation eines PRA-Anschlusses durch BRA-Anschlüsse in der paketorientierten Vermittlungsstelle P-Vst vorgenommen werden kann. Der **PRA**-Anschluss hat dreißig Basiskanäle bzw. Nutzdatenkanäle und einen Signalisierungskanal bzw. D-Kanal. In der Figur 2 wiedergegeben durch das Bezugszeichen 30B+1D. Dieser **PRA**-Anschluss wird in der paketorientierten Vermittlungsstelle PVST durch fünfzehn BRA-Anschlüsse BRA1...BRA15 mit jeweils zwei Nutzdatenkanälen und einem Signalisierungskanal bzw. D-Kanal repräsentiert (Bezugszeichen für BRA-Konfiguration: 2B+1D). In den peripheren Adapter TNE1 wird mit Hilfe einer Umsetztabelle ndattble eine Zuordnung bzw. Abbildung der fünfzehn logischen BRA-Anschlüsse BRA1 ... BRA15 auf den physikalischen PRA-Anschluss durchgeführt. Dabei werden die beiden Basiskanäle des ersten BRA-Anschlusses BRA1 auf die Nutzdatenkanäle 1 und 2 des PRA-Anschlusses abgebildet. Die beiden Basiskanäle des zweiten BRA-Anschlusses BRA2 werden dann auf die Nutzdatenkanäle 3 und 4 des **PRA**-Anschlusses abgebildet. So werden jeweils zwei Basiskanäle der BRA-Anschlüsse auf zwei Nutzdatenkanäle des **PRA**-Anschlusses übergeführt. Bei der Nummerierung entsprechend der Umsetztabelle ndattble ist zu beachten, dass der Kanal mit der Nummer 16 des **PRA**-Anschlusses für die Signalisierung reserviert ist und folglich nicht bei der Änderung der Nutzdatenbezüge berücksichtigt werden muss. Die gezeigte Tabelle gibt eine Vorschrift für die Änderung von Nutzdatenbezüge, wie z.B. die Nutzdatenkanalnummer, in den Signalisierungsnachrichten. Die Referenzierung der Nutzdatenkanäle wird angepasst. Nutzdaten selber brauchen keiner An passung zu unterliegen. Der Austausch von Signalisierungsinformationen, z.B. die Übermittlung einer Verbindungsaufbaunachricht, zwischen peripherem Adapter TNE1 und paketorientierter Vermittlungsstelle P-Vst wird mit Hilfe des SCTP-Protokolls vorgenommen. Bei einer vermittlungsstellenseitigen Konzentration der Nutzdatenkanäle würden weniger als fünfzehn BRA-Anschlüsse auf den **PRA**-Anschluss abgebildet werden. Dies ist insofern flexibel und einfach realisierbar, als die BRA-Anschlüsse logische aber keine physikalischen Anschlüsse sind. Sinnvoll ist eine Konzentration zum Beispiel, wenn der Datendurchsatz des PRA-Anschlusses deutlich geringer als die maximale Kapazität ist und somit sogar in Lastsituationen nur ein geringer Teil der Nutzdatenkanäle des PRA gleichzeitig belegt ist.

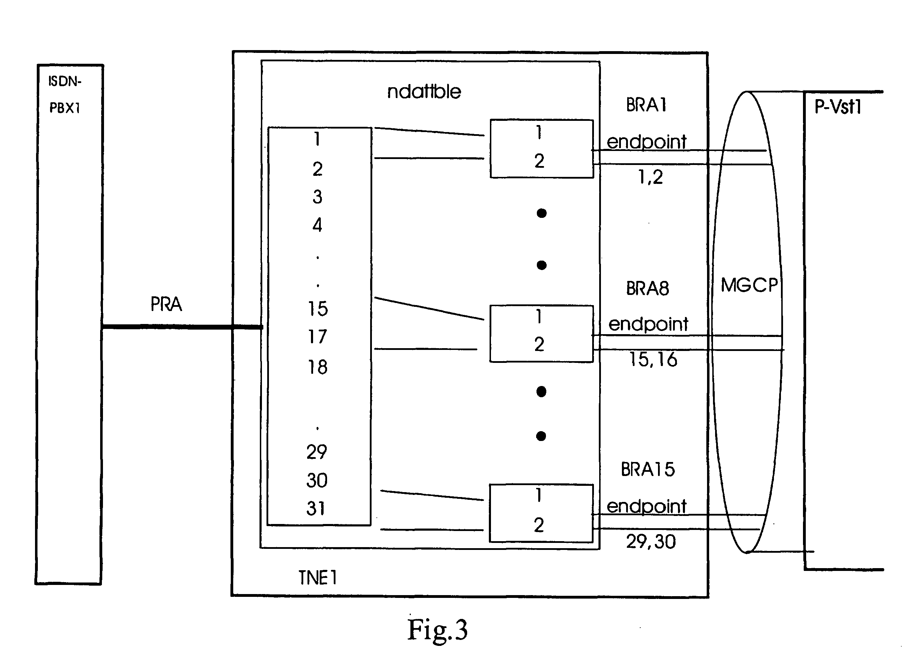

Figur 3 zeigt eine entsprechende Umsetzung von Signalisierungsinformationen zur Nutzdatensteuerung, z.B. des Nutzdatenroutings, im Paketnetz. Das vermittlungsstellenseitig verwendete Protokoll ist dabei beispielsweise das MGCP-Protokoll, in dem jeder B-Kanal als eigener Endpunkt definiert wird.

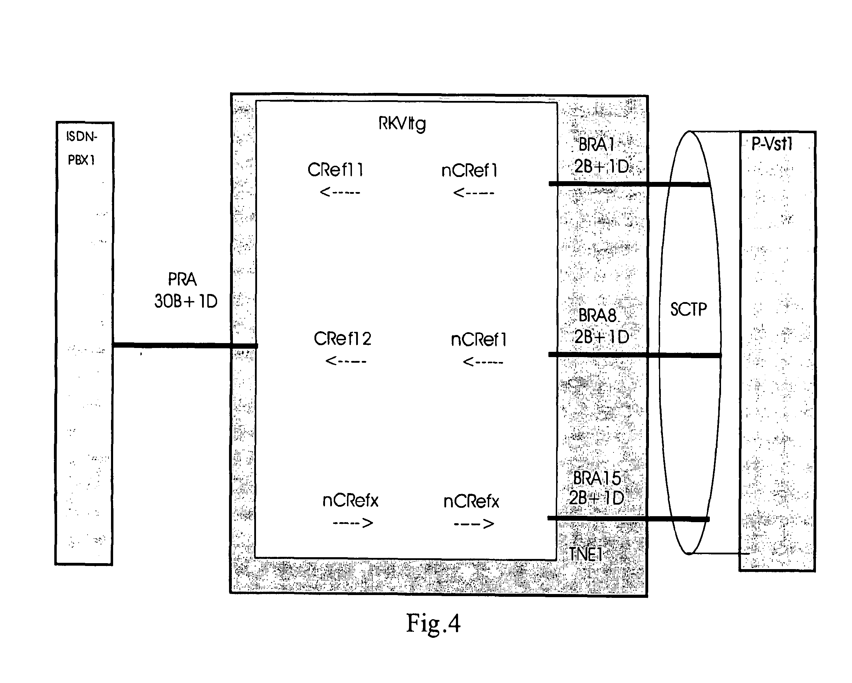

In Figur 4 ist die erfindungsgemäße Behandlung der Rufkennungen (Call References) für das Szenario entsprechend der Figuren 1 bis 3 dargestellt. Rufkennungen werden temporär und verbindungsbezogen pro Anschluss bzw. D-Kanal vergeben. Daher können gleiche Rufkennungen zu verschiedenen D-Kanälen der BRA-Anschlüsse von der paketorientierten Vermittlungsstelle in den peripheren Adapter TNE1 übertragen werden. Eine solche Situation kann zum Beispiel vorkommen, wenn ein A-Teilnehmer einen an die Nebenstelle ISDN-PBX2 angeschlossenen B-Teilnehmer ruft. Rufkennungen von den BRA-Anschlüssen, die zu dem peripheren Adapter TNE1 übertragen werden, werden von einer Rufkennungsverwaltung RKVltg des peripheren Adapters TAE1 für die ISDN-nebenstellenseitige Weiterverwendung angepasst. Gleiche Rufkennungen, zum Beispiel nCRef1 für die Anschlüsse BRA1 und BRA2 werden dabei auf unterschiedliche Rufkennungen CRefl1 und CRefl2 abgebildet, um Eindeutigkeit innerhalb des D-Kanals des PRA-Anschlusses herzustellen. Auf Seite der ISDN-Nebenstelle ISDN-PBX1 neu vergebene Rufkennungen, wie zum Beispiel nCRefx, können vermittlungsstellenseitig, d.h. paketnetzseitig, unverändert übernommen werden. Über den D-Kanal des PRA-Anschlusses Richtung paketorientierte Vermittlungsstelle P-Vst übertragene Rufreferenzen sind innerhalb des D-Kanals eindeutig und behalten diese Eindeutigkeit natürlich auch nach Aufteilung auf die D-Kanäle der verschiedenen logischen BRA-Anschlüsse. Die Übertragung der Rufkennungen bzw. von Signalisierungsnachrichten, die Rufkennungen enthalten, zwischen den peripheren Adaptern TNE1 und der paketorientierten Vermittlungsstelle P-Vst wird vorzugsweise mit Hilfe des SCTP-Protokolls und ISDN-spezifischer Adaptionsschicht (z. B. IUA) realisiert.

## Patentansprüche

1. Verfahren zum Austausch von Signalisierungsinformationen zwischen einem PRA ISDN-Anschluss (PRA) und einer paketorientierten Vermittlungsstelle (P-Vst) über einen peripheren Adapter (TNE1), wobei
- in der paketorientierten Vermittlungsstelle (P-Vst) PRA ISDN-Anschlüsse durch BRA ISDN-Anschlüsse repräsentiert werden,
- die Bearbeitung und Behandlung der von dem PRA ISDN-Anschluss (PRA) übertragenen Signalisierungsinformationen durch die paketörientierte Vermittlungsstelle (P-Vst) unabhängig vom Typ des ISDN-Anschlusses (PRA) als BRA ISDN-Anschluss erfolgt,
- von dem PRA ISDN-Anschluss (PRA) zu dem-peripheren Adapter (TNE1) übertragene Signalisierungsinformationen für die vom ISDN-Anschlusstyp unabhängige Behandlung von ISDN-Anschlüssen als BRA ISDN-Anschlüsse durch die paketbrientierte Vermittlungsstelle (P-Vst) angepasst werden, und
- von der paketorientierten Vermittlungsstelle (P-Vst) zu dem peripheren Adapter (TNE1) übertragene Signalisierungsinformationen in dem peripheren Adapter (TNE1) nach Maßgabe des ISDN-Anschlusstyps des PRA ISDN-Anschlusses angepasst werden.

2. Verfahren nach Anspruch 1,
**dadurch gekennzeichnet,**
- **dass** in der paketorientierten Vermittlungsstelle (P-Vst) verschiedene ISDN-Anschlüsse (PRA, BRA) durch einen einzigen Anschlusstyp repräsentiert werden,
- **dass** der Anschlusstyp des ISDN-Anschlusses (PRA) sich von dem ISDN-Anschlusstyp (BRA) unterscheidet, durch den ISDN-Anschlüsse in der paketorientierten Vermittlungsstelle repräsentiert werden, und
- **dass** Signalisierungsinformationen zwischen dem ISDN-Anschluss (PRA) und der paketorientierten Vermittlungsstelle (P-Vst) ausgetauscht werden, für die im peripheren Adapter (TNE1) eine Anpassung nach Maßgabe der unterschiedlichen ISDN-Anschlusstypen vorgenommen wird.

3. Verfahren nach Anspruch 2,
**dadurch gekennzeichnet,**
- **dass** die Anpassung der Signalisierungsinformationen im Sinne einer Abbildung von für den jeweiligen ISDN-Anschlusstyp unterschiedenen Nutzdatenkanälen aufeinander vorgenommen wird.

4. Verfahren nach Anspruch 3,
**dadurch gekennzeichnet,**
- **dass** die Abbildung mit Hilfe wenigstens einer Tabelle (ndattble) im peripheren Adapter (TNE1) vorgenommen wird.

5. Verfahren nach einem der vorhergehenden Ansprüche 2 bis 4,
**dadurch gekennzeichnet,**
- **dass** in der paketorientierten Vermittlungsstelle (P-Vst) verschiedene ISDN-Anschlusstypen durch einen BRA-Anschluss oder eine Mehrzahl von BRA-Anschlüssen repräsentiert werden, und
- **dass** der Typ des ISDN-Anschlusses (PRA) durch einen PRA Anschluss gegeben ist.

6. Verfahren nach einem der Ansprüche 3 bis 5,
**dadurch gekennzeichnet,**
**dass** im Rahmen der Abbildung eine Konzentration von Nutzdatenkanälen vorgenommen wird.

7. Verfahren nach einem der Ansprüche 3 bis 6,
**dadurch gekennzeichnet,**
**dass** Rufkennungen und Nutzkanalbezüge im Sinne der Abbildung von für den jeweiligen ISDN-Anschlusstyp unterschiedenen Nutzdatenkanälen aufeinander angepasst werden.

8. Verfahren nach einem der vorhergehenden Ansprüche,
**dadurch gekennzeichnet,**
- **dass** zwischen dem ISDN-Anschluss (PRA) und dem peripheren Adapter (TNE1) das DSS1 Protokoll verwendet wird, und
- **dass** auf der Sicherungsschicht des DSS1 Protokolls dauerhaft eine Verbindung aufrechterhalten wird.

9. Verfahren nach einem der vorhergehenden Ansprüche
**dadurch gekennzeichnet,**
- **dass** zwischen dem peripheren Adapter (TNE1) und der paketorientierten Vermittlungsstelle (P-Vst) ausgetauschte Signalisierung zur Steuerung des Nutzdatenkanals im Sinne der Abbildung von für den jeweiligen ISDN-Anschlußtyp unterschiedenen Nutzdatenkanälen über den peripheren Adapter (TNE1) umgesetzt wird.

10. Verfahren nach Anspruch 9
**dadurch gekennzeichnet,**
- **dass** zur Signalisierung der Steuerung des Nutzdatenkanals ein Media Gateway Control Protocol (MGCP) oder das H.248 Protokoll zwischen peripherem Adapter (TNE1) und der paketbasierten Vermittlungsstelle (P-Vst) verwendet wird.

11. Peripherer Adapter (TNE1), zum Anschluss von einer ISDN-Nebenstelle (ISDN-PBX1) oder eines ISDN-Endgeräts an ein Paketnetz (IPNET),
- mit Mitteln zum Anpassen von von einem PRA ISDN-Anschluss (PRA) an eine paketorientierte Vermittlungsstelle (P-Vst) übertragenen Signalisierungsinformationen für eine ISDN-Anschlusstyp unabhängigen Bearbeitung und Behandlung der Signalisierungsinformationen als Signalisierungsinformationen von BRA ISDN-Anschlüssen durch die paketbasierte Vermittlungsstelle (P-Vst) nach einem der Verfahren 1 bis 10.

12. Peripherer Adapter (TNE1) nach Anspruch 11,
**dadurch gekennzeichnet,**
- **dass** die Mittel Mittel zum Anpassen von Signalisierungsinformationen, die mit verschiedenen ISDN-Anschlusstypen korrespondieren, und Mittel für eine Anpassung der Signalisierungsinformationen im Sinne einer Abbildung von für den jeweiligen ISDN-Anschlusstyp unterschiedenen Nutzdatenkanälen aufeinander umfassen.

13. Peripherer Adapter (TNE1) nach einem der Ansprüche 11 oder 12,
**dadurch gekennzeichnet,**
- **dass** die Mittel eine Tabelle (ndattble) zum Anpassen von Signalisierungsinformationen im Sinne einer Abbildung von für den jeweiligen ISDN-Anschlusstyp unterschiedenen Nutzdatenkanälen aufeinander umfassen.

14. Peripherer Adapter (TNE1) nach einem der Ansprüche 11 bis 13,
**dadurch gekennzeichnet,**
**dass** die unterschiedlichen ISDN-Anschlusstypen durch einen paketnetzseitigen BRA-Anschluss und einen ISDN-Anschlussseitigen PRA-Anschluss gegeben sind.

15. Peripherer Adapter (TNE1) nach einem der Ansprüche 11 bis 14,
**dadurch gekennzeichnet,**
- **dass** die Mittel zum Anpassen von Signalisierungsinformationen Mittel zum Anpassen von Rufkennungen und Nutzkanalbezügen umfassen.

16. Peripherer Adapter (TNE1) nach einem der Ansprüche 11 bis 15,
**dadurch gekennzeichnet,**
- **dass** der periphere Adapter (TNE1) als IAD oder MTA ausgebildet ist.

## Claims

1. Method for exchanging signalling information between an ISDN connection (PRA) and a packet-oriented exchange (P-Vst) via a peripheral adapter (TNE1), whereby
- in the packet-oriented exchange (P-Vst) ISDN-connections (PRA) are represented by ISDN connections (BRA),
- the signalling information transmitted by the ISDN connection (PRA) is processed and handled by the packet-oriented exchange (P-Vst) as an ISDN connection (BRA) independent of the type of the ISDN connection (PRA),
- signalling information transmitted by the ISDN connection (PRA) to the peripheral adapter (TNE1) is adapted by the packet-oriented exchange (P-Vst) for handling ISDB connections as ISDN connections (BRA) independent of the ISDN connection type, and
- signalling information transmitted by the packet-oriented exchange (P-Vst) to the peripheral adapter (TNE1) is adapted in the peripheral adapter (TNE1) in accordance with the ISDN connection type of the ISDN connection (PRA).

2. Method according to claim 1,
**characterised in that**,
- different ISDN connections (PRA, BRA) are represented by one single connection type in the packet-oriented exchange (P-Vst),
- the connection type of the ISDN connection (PRA) differs from the ISDN connection type (BRA), by which ISDN connections are represented in the packet-oriented exchange, and
- signalling information is exchanged between the ISDN connection (PRA) and the packet-oriented exchange (P-Vst), and said information undergoes adaptation in the peripheral adapter (TNE1) in accordance with the different ISDN connection types.

3. Method according to claim 2,
**characterised in that**,
- the adaptation of the signalling information ensues in the sense of a mapping of the useful data channels differentiated for the respective ISDN connection type on top of each other.

4. Method according to claim 3,
**characterised in that**,
- the mapping ensues with the aid of at least one table (ndattble) in the peripheral adapter (TNE1).

5. Method according to one of the preceding claims 2 to 4,
**characterised in that**,
- in the packet-oriented exchange (P-Vst), different ISDN connection types are represented by one BRA connection or several BRA connections, and
- the type of the ISDN connection (PRA) is given by a PRA connection.

6. Method according to one of the claims 3 to 5,
**characterised in that**,
a concentration of useful data channels ensues as part of the mapping.

7. Method according to one of the claims 3 to 6,
**characterised in that**,
call identifiers and bearer channel references are adapted in the sense of the mapping of useful data channels differentiated for the respective ISDN connection type on top of each other.

8. Method according to one of the preceding claims,
**characterised in that**,
- the DSS1 protocol is used between the ISDN connection (PRA) and the peripheral adapter (TNE1), and
- a connection is maintained permanently on the backup layer of the DSS1 protocol.

9. Method according to one of the preceding claims,
**characterised in that**,
- signalling, exchanged between the peripheral adapter (TNE1) and the packet-oriented exchange (P-Vst), said signalling being used to control the useful data channel in the sense of the mapping of useful data channels differentiated for the respective ISDN connection type, is converted via the peripheral adapter (TNE1).

10. Method according to claim 9,
**characterised in that**,
- a Media Gateway Control Protocol (MGCP) or the H.248 protocol is used between peripheral adapter (TNE1) and the packet-based exchange (P-Vst) for signalling the control of the useful data channel.

11. Peripheral adapter (TNE1), for the connection of an ISDN private branch (ISDN PBX1) or of an ISDN terminal unit to a packet-switched network (IPNET),
- with means for adapting signalling information transmitted by an ISDN connection (PRA) to a packet-oriented exchange (P-Vst) for a processing and handling of the signal information as signalling information of ISDN connections (BRA) by the packet-based exchange (P-Vst) independent of ISDN connection type according to one of claims 1 to 10.

12. Peripheral adapter (TNE1) according to claim 11,
**characterised in that**,
- the means include means for adapting signalling information that corresponds with different ISDN connection types, and means for an adaptation of the signalling information in the sense of a mapping of useful data channels differentiated for the respective ISDN connection type on top of each other.

13. Peripheral adapter (TNE1) according to one of the claims 11 or 12,
**characterised in that**,
- the means include a table (ndattble) for adapting signalling information in the sense of a mapping of useful data channels differentiated for the respective ISDN connection type on top of each other.

14. Peripheral adapter (TNE1) according to one of the claims 11 to 13,
**characterised in that**,
the different ISDN connection types are given by a BRA connection at the packet-switched network end and a PRA connection at the ISDN connection end.

15. Peripheral adapter (TNE1) according to one of the claims 11 to 14,
**characterised in that**,
- the means for adapting signalling information include means for adapting call identifiers and bearer channel references.

16. Peripheral adapter (TNE1) according to one of the claims 11 to 15,
**characterised in that**,
- the peripheral adapter (TNE1) is designed as a LAD or an MTA.

## Revendications

1. Procédé d'échange d'informations de signalisation entre une connexion RNIS PRA (PRA) et un centre de commutation orienté par paquets (P-Vst) par le biais d'un adaptateur périphérique (TNE1),
- des connexions RNIS PRA étant représentées par des connexions RNIS BRA dans le centre de commutation orienté par paquets (P-Vst),
- le traitement et la prise en charge des informations de signalisation transmises par la connexion RNIS PRA (PRA) étant exécutés par le centre de commutation orienté par paquets (P-Vst) comme pour une connexion RNIS BRA indépendamment du type de la connexion RNIS (PRA),
- les informations de signalisation transmises de la connexion RNIS PRA (PRA) à l'adaptateur périphérique (TNE1) sont adaptées pour la prise en charge, indépendante du type de connexion RNIS, de connexions RNIS en tant que connexions RNIS BRA par le centre de commutation orienté par paquets (P-Vst) et
- les informations de signalisation transmises du centre de commutation orienté par paquets (P-Vst) vers l'adaptateur périphérique (TNE1) sont adaptées dans l'adaptateur périphérique (TNE1) selon le type de connexion RNIS de la connexion RNIS PRA.

2. Procédé selon la revendication 1, **caractérisé**
- **en ce que** différentes connexions RNIS (PRA, BRA) sont représentées par un seul type de connexion dans le centre de commutation orienté par paquets (P-Vst),
- **en ce que** le type de connexion de la connexion RNIS (PRA) diffère du type de connexion RNIS (BRA) par lequel des connexions RNIS sont représentées dans le centre de commutation orienté par paquets et
- **en ce que** des informations de signalisation sont échangées entre la connexion RNIS (PRA) et le centre de commutation orienté par paquets (P-Vst), pour lesquelles une adaptation est réalisée dans l'adaptateur périphérique (TNE1) selon les différents types de connexions RNIS.

3. Procédé selon la revendication 2, **caractérisé**
- **en ce que** l'adaptation des informations de signalisation est réalisée en vue d'une application de canaux de données utiles, différenciés pour le type de connexion RNIS respectif, les uns sur les autres.

4. Procédé selon la revendication 3, **caractérisé**
- **en ce que** l'application est exécutée à l'aide d'au moins une table (ndattble) dans l'adaptateur périphérique (TNE1).

5. Procédé selon l'une des revendications précédentes 2 à 4, **caractérisé**
- **en ce que** différents types de connexions RNIS sont représentés par une connexion BRA ou une pluralité de connexions BRA dans le centre de commutation orienté par paquets (P-Vst) et
- **en ce que** le type de la connexion RNIS (PRA) est défini par une connexion PRA.

6. Procédé selon l'une des revendications 3 à 5, **caractérisé en ce que** l'on procède, dans le cadre de l'application, à une concentration de canaux de données utiles.

7. Procédé selon l'une des revendications 3 à 6, **caractérisé en ce que** des identifications d'appel et des références de canaux utiles sont adaptées en vue de l'application de canaux de données utiles, différenciés pour le type de connexion RNIS respectif, les uns sur les autres.

8. Procédé selon l'une des revendications précédentes, **caractérisé**
- **en ce que** le protocole DSS1 est utilisé entre la connexion RNIS (PRA) et l'adaptateur périphérique (TNE1) et
- **en ce qu'**une liaison est maintenue de manière durable sur la couche de sécurité du protocole DSS1.

9. Procédé selon l'une des revendications précédentes, **caractérisé**
- **en ce que** la signalisation, échangée entre l'adaptateur périphérique (TNE1) et le centre de commutation orienté par paquets (P-Vst), pour le contrôle du canal de données utiles est convertie par le biais de l'adaptateur périphérique (TNE1) au sens de l'application de canaux de données utiles différenciés pour le type de connexion RNIS respectif.

10. Procédé selon la revendication 9, **caractérisé**
- **en ce qu'**on utilise un protocole MGCP *(Media* Gateway *Control Protocol)* ou le protocole H.248 entre l'adaptateur périphérique (TNE1) et le centre de commutation basé paquets (P-Vst) pour la signalisation du contrôle du canal de données utiles.

11. Adaptateur périphérique (TNE1) pour le raccordement d'un poste supplémentaire RNIS (ISDN-PBX1) ou d'un terminal RNIS à un réseau à commutation par paquets (IPNET),
- comprenant des moyens pour adapter des informations de signalisation transmises d'une connexion RNIS PRA (PRA) à un centre de commutation orienté par paquets (P-Vst) pour un traitement et une prise en charge, indépendants du type de connexion RNIS, des informations de signalisation en tant qu'informations de signalisation de connexions RNIS BRA par le centre de commutation basé paquets (P-Vst) selon un des procédés 1 à 10.

12. Adaptateur périphérique (TNE1) selon la revendication 11, **caractérisé**
- **en ce que** les moyens comprennent un moyen pour l'adaptation d'informations de signalisation correspondant à différents types de connexions RNIS et un moyen pour une adaptation des informations de signalisation au sens d'une application de canaux de données utiles, différenciés pour le type de connexion RNIS respectif, les uns sur les autres.

13. Adaptateur périphérique (TNE1) selon l'une des revendications 11 ou 12, **caractérisé**
- **en ce que** les moyens comprennent une table (ndattble) pour l'adaptation d'informations de signalisation au sens d'une application de canaux de données utiles, différenciés pour le type de connexion RNIS respectif, les uns sur les autres.

14. Adaptateur périphérique (TNE1) selon l'une des revendications 11 à 13, **caractérisé**
- **en ce que** les différents types de connexions RNIS sont définis par une connexion BRA sur le côté du réseau à commutation par paquets et par une connexion PRA sur le côté de la connexion RNIS.

15. Adaptateur périphérique (TNE1) selon l'une des revendications 11 à 14, **caractérisé**
- **en ce que** les moyens d'adaptation d'informations de signalisation comprennent des moyens pour l'adaptation d'identifications d'appel et de références de canaux utiles.

16. Adaptateur périphérique (TNE1) selon l'une des revendications 11 à 15, **caractérisé**
- **en ce que** l'adaptateur périphérique (TNE1) est exécuté en tant que IAD ou MTA.
